(19) Europäisches Patentamt
European Patent Office
Office européen des brevets

(11) **EP 3 006 916 B1**

(12) **EUROPÄISCHE PATENTSCHRIFT**

(45) Veröffentlichungstag und Bekanntmachung des Hinweises auf die Patenterteilung:
**24.05.2023  Patentblatt 2023/21**

(21) Anmeldenummer: **15188356.8**

(22) Anmeldetag: **05.10.2015**

(51) Internationale Patentklassifikation (IPC):
**G01N 9/00** (2006.01)        **G01N 9/06** (2006.01)
**G01N 11/16** (2006.01)

(52) Gemeinsame Patentklassifikation (CPC):
**G01N 9/002; G01N 9/06; G01N 11/16;**
G01N 2291/02818

(54) **VERFAHREN UND VORRICHTUNG ZUR ERMITTLUNG DER FÜLLQUALITÄT EINES BIEGESCHWINGERS**

METHOD AND DEVICE FOR DETERMINING THE FILLING QUALITY OF AN OSCILLATOR

PROCÉDÉ ET DISPOSITIF DESTINÉS À LA DÉTERMINATION DE LA QUALITÉ DE REMPLISSAGE D'UN RÉSONATEUR DE FLEXIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2014  AT 507262014**

(43) Veröffentlichungstag der Anmeldung:
**13.04.2016  Patentblatt 2016/15**

(73) Patentinhaber: **Anton Paar GmbH**
**8054 Graz-Straßgang (AT)**

(72) Erfinder:
• **Belitsch, Wolfgang**
  **8075 Hart bei Graz (AT)**
• **Rossegger, Stefan**
  **8010 Graz (AT)**
• **Amsüss, Robert**
  **8053 Graz (AT)**

(74) Vertreter: **Wildhack & Jellinek**
**Patentanwälte OG**
**Landstraßer Hauptstraße 50**
**1030 Wien (AT)**

(56) Entgegenhaltungen:
**WO-A1-2011/008307    AT-A4- 505 937**

EP 3 006 916 B1

**Beschreibung**

Die Erfindung betrifft ein Verfahren gemäß Anspruch 1 zur Ermittlung der Füllqualität eines Biegeschwingers, dessen Schwingerrohr vom Messfluid durchströmt wird, sowie eine Vorrichtung zur Durchführung des Verfahrens gemäß Anspruch 12.

Die AT 505.937 zeigt ein Verfahren zur Füllfehlererkennung aus dem Schwingungsverhalten in Grund- und Oberwelle. Mittels Justiermessungen wird aus dem Schwingungsverhalten eine "Blasenfreikurve" für die korrekte Befüllung ermittelt und nachfolgend ein Gültigkeitsbereich für die maximale Abweichung der Messwerte in Grund- und Oberwelle definiert, um die korrekte Befüllung eines Biegeschwingers festzustellen. WO 2011008307 betrifft eine Methode zur Quantifizierung eines Fluids das durch eine Tankleitung strömt, wobei ein Coriolis-Massendurchflussmesser oder ein vibrierender Densitometer verwendet wird. Eine externe Viskositätsmessung kann vorgesehen sein. Vorrangiges Ziel der Erfindung ist die Erkennung von Gasblasen bei der Befüllung eines Biegeschwingers , die sich in der zu messenden Probenflüssigkeit befinden und die zu einem falschen Messergebnis führen würden. Dazu wird die Tatsache ausgenutzt, dass in der Probenflüssigkeit befindliche Gasblasen nicht nur eine Änderung der Resonanzfrequenz, sondern auch eine Änderung der Güte des Schwingungssystems bewirken.

Die Messung der Dichte von fluiden Medien mit einem Biegeschwinger beruht auf der Tatsache, dass die Schwingung eines mit einer zu untersuchenden Probe gefüllten Hohlkörpers von der Füllung des Schwingerrohrs abhängt, d.h. von der Masse bzw. wenn das Volumen konstant ist, von der Dichte des eingefüllten Mediums.

Eine einsetzbare Messzelle enthält das schwingfähige Gebilde, nämlich einen hohlen, U-förmig gebogenen, gläsernen oder metallischen Rohrkörper. Dieser wird auf elektronischem Weg zu einer ungedämpften Schwingung angeregt. Die beiden Schenkel des U-förmigen Rohrs bilden die Federelemente des Schwingers. Die Eigenfrequenz des U-förmigen Schwingerrohrs wird nur von jenem Teil der Probe beeinflusst, welcher an der Schwingung tatsächlich teilnimmt. Dieses an der Schwingung teilnehmende Volumen V ist durch die ruhenden Schwingknoten an den Einspannstellen des Schwingerrohrs begrenzt. Ist das Schwingerrohr mindestens bis zu den Einspannstellen mit der Probe gefüllt, nimmt immer dasselbe, genau definierte Volumen V an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Fluiden gemessen werden, die den Schwinger durchströmen.

Beispielsweise kann die Anregung der Schenkel des U-förmigen Rohres gegeneinander erfolgen. Dabei ergeben sich für den Schwinger bestimmte Resonanzfrequenzen, in denen das System bevorzugt schwingt.

Die Dichte der Flüssigkeit bestimmt also die spezifischen Frequenzen, in denen das U-förmige Rohr schwingt. Verwendet man Präzisions-Glasrohre oder -Metallrohre, so variieren deren harmonische Eigenschaften je nach Dichte und Viskosität der Flüssigkeit. Die Resonanz-Frequenzen werden durch geeignete Anregung und Abnahme der Schwingungen ausgewertet und aus der Periodendauer die Dichte der eingefüllten fluiden Probe bestimmt. Der Schwinger wird mit Fluiden bekannter Dichte kalibriert und so die Messungen auswertbar.

Derartige Dichteschwinger bzw. Biegeschwinger sind schon seit langem bekannt und werden in unterschiedlichsten Ausführungsformen hinsichtlich Anregung und Abnahme der Schwingung hergestellt. (z.B. mit Magnetspulen und Magneten, piezoelektrischen Elementen, kapazitive Messung ...)

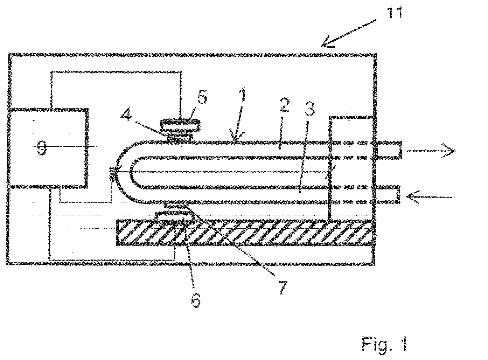

Fig. 1 zeigt schematisch einen derartigen Biegeschwinger 11.

Hier wird die Schwingung durch einen Magneten 7 direkt am Schwingerrohr 3 erzeugt, der mit einer gegenüberliegenden Spule 6 wechselwirkt. Eine zweite Kombination von Spule 5 und Magnet 4 ist für die Abnahme der ausgebildeten Schwingung am anderen Schenkel 2 des U-förmigen Rohrs angebracht. Mit 9 ist eine Auswerteeinheit bezeichnet.

Anregung und Abnahme kann hier beispielsweise auch mittels Piezoelementen erfolgen, die Elemente werden so angebracht, dass sie nicht in einem Knotenpunkt der untersuchten Eigenschwingungen des Schwingers liegen, können aber auch beispielsweise nahe der Einspannstelle erfolgen.

Die Anregung des Schwingers zu Schwingungen erfolgt mittels eines beispielsweise digitalen Erregerverstärker, der in einem Regelkreis mit dem Abnahmesignal z.B. auf die maximale Amplitude und damit auf die Eigenschwingung des Biegeschwingers regelt. Die Steuer - und Auswerteelektronik misst hier die Signale, z.B. Amplitude, Frequenz und Phasenwinkel, zwischen Anregungs- und Abnahmesignal oder einem anderen, für die Güte des Schwingers und damit für die Dämpfung des Systems repräsentativen Parameter.

Die für den Schwinger charakteristischen Frequenzen hängen vom Material des Schwingerrohrs 1 und dessen Geometrie ab, insbesondere vom Durchmesser des U-förmigen Rohrs 1, der Länge der Schenkel 2, 3, dem Biegeradius und damit auch dem Abstand der beiden Schenkel 2, 3 zueinander

Bei einer bestimmten Temperatur wird zur Berechnung der Dichte aus der Schwingungsdauer ein Hohlkörper der Masse m betrachtet, der elastisch an einer Feder mit der Federrate R aufgehängt ist. Sein Volumen V sei mit einem Fluid der Dichte $\rho$ gefüllt.

Für die Periodendauer P dieses Systems in der Grundschwingung gilt:

$$P = 2\pi \sqrt{\frac{(m + \rho V)}{R}} \tag{1}$$

daraus ergibt sich durch Umformen für die Dichte:

$$\rho = P^2 \frac{R}{4\pi^2 V} - \frac{m}{V} = A\,P^2 - B \tag{2}$$

mit den Justierkonstanten A und B. Diese enthalten die Federrate R des Schwingers, dessen Leermasse und das Volumen des Fluids, welches an der Schwingung teilnimmt. A und B sind also Apparatekonstanten bzw. Justierwerte eines individuellen Schwingers. Sie können aus zwei Messungen der Schwingungsdauer des Schwingers, gefüllt mit Fluiden bekannter unterschiedlicher Dichte, im Normalfall Luft und Wasser oder spezielle Kalibrierstandards, ermittelt werden. Das Verhaltens des Schwingers und damit auch die Konstanten A und B sind allerdings viskositätsabhängig. Damit kann bzw. muss der oben ermittelte Dichtewert im Regelfall mit einer Viskositätskorrektur versehen werden.

Bekannt ist, dass die Dämpfung des Biegeschwingers hauptsächlich von der Viskosität und der Homogenität der Probe beeinflusst wird. Unter der Voraussetzung, dass kein Füllfehler vorliegt, kann bei richtiger Bauweise und Dimensionierung des Schwingers ein eindeutiger funktionaler Zusammenhang zwischen Viskosität und Güte einer Resonanzschwingung gefunden werden.

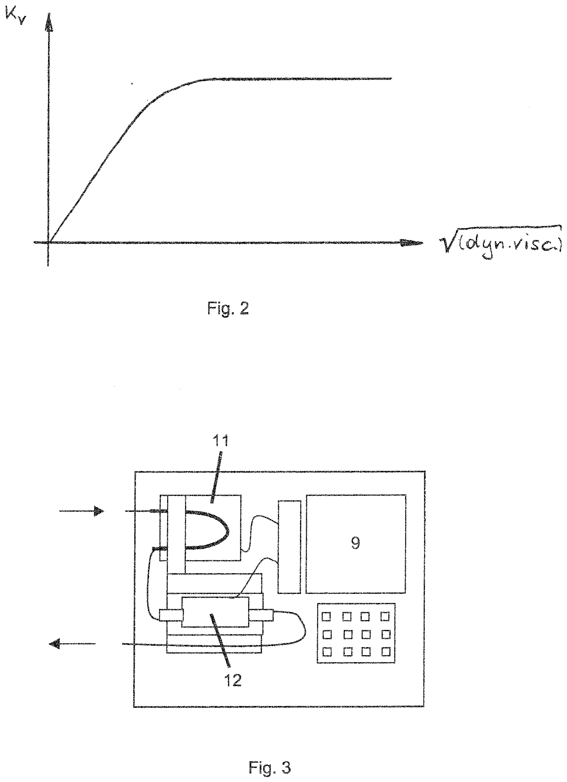

Der Einfluss der dynamischen Viskosität ($\eta$) auf den viskositätsabhängigen Dichte-Messfehler ($K_v(\eta) = \Delta\rho(\eta)/\rho$) bei der Messung der Dichte der zu untersuchenden Probenflüssigkeit ist ebenfalls bekannt und in Fig. 2 dargestellt. Fig. 2 zeigt den Verlauf des Messfehlers des Biegeschwingers bedingt durch die Viskosität.

In kommerziell erhältlichen Biegeschwingern wird diese Abhängigkeit für die Viskositätskorrektur des Dichtemesswertes herangezogen (siehe z.B. AT 400 767 B, EP 0 487 499 A2, US 5,339,258). Alle diese Korrekturen beruhen auf dem Zusammenhang zwischen der Güte des Schwingers und der Viskosität des im Schwinger befindlichen Messfluids.

Als Maß für die Dämpfung wird dabei häufig der Gütefaktor (Qualitätsfaktor Q) verwendet, definitionsgemäß kann er für eine Resonanzschwingung bei Resonanzfrequenz $f_{res}$ und zugehöriger Halbwertsbreite der Resonanzkurve $\Delta f_{FWHM}$ des Schwingers durch $Q = f_{res} / \Delta f_{FWHM}$ ermittelt werden. Der Gütefaktor ist also ein Maß für die Dämpfung des Schwingers und indirekt zu dieser proportional.

Häufig werden zur erweiterten Charakterisierung von Proben nicht nur Dichtemessgeräte, sondern auch weitere Messgeräte bzw. Sensoren wie beispielsweise Schallgeschwindigkeitsmessgeräte oder Viskositätsmessgeräte verwendet.

Für Kombinationsmessungen mit unterschiedlichen Sensoren können die Messergebnisse des einen Sensors beispielsweise über eine Schnittstelle dem zweiten Sensor bzw. dessen Auswerteeinheit zur Verfügung gestellt werden. Weiteres können die Sensoren auch mit einer einzigen Auswerte- und Anzeigeeinheit betrieben werden. Der Berechnungseinheit stehen dann direkt die Messwerte beider Sensoren zur Verfügung.

Beispielsweise ist ein Rotationsviskosimeter zur Bestimmung der dynamischen Viskosität fluider Proben bekannt, bei dem die Probe zuerst einem Biegeschwinger 11 zur Dichtemessung und anschließend einem Viskositätsmessgerät 12 zugeleitet wird. Eine gemeinsame Auswerte- und Anzeigeeinheit 9 verarbeitet die Signale aus Schwinger und Viskositätssensor und zeigt sowohl Viskosität als auch Dichte des untersuchten Fluids an.

Fig. 3 zeigt schematisch ein derartiges Rotationsviskosimeter.

Der in Fig. 3 dargestellte Biegeschwinger 11 kann aber auch in Kombination mit anderen Sensoren, wie beispielsweise Rotationsviskosimetern oder Sensoren eingesetzt werden, die über die Vibration von Membranen die Viskosität bestimmen (MEMS).

Erfindungsgemäß ist ein Verfahren gemäß Anspruch 1 angegeben. Es ist vorgesehen,

- dass eine Justierkurve oder -tabelle herangezogen wird, die den funktionalen Zusammenhang zwischen einem für die Dämpfung des Schwingerrohrs maßgeblichen Parameter und der dynamischen Viskosität von Messfluiden wiedergibt,
  wobei zur Erstellung der Justierkurve oder -tabelle Messfluide mit bekannter dynamischer Viskosität [EMH1]als Justierstandards verwendet werden und der Zusammenhang zwischen der dynamischen Viskosität der Messfluide und eines für die Dämpfung des Schwingerrohrs maßgeblichen Parameters, vorzugsweise der Amplitude und/oder Phase einer Eigenschwingung, ermittelt wird,
- dass zur Ermittlung der Füllqualität im Zuge der Messung des zu untersuchenden Messfluids mit dem Biegeschwinger mit einem eigenständigen, weiteren bzw. zusätzlichen Messgerät zumindest ein Messwert für die dynamische Viskosität des zu untersuchenden Messfluids bestimmt wird,

- dass im Zuge der Messung des zu untersuchenden Messfluids mit dem Biegeschwinger zumindest ein Messwert für den für die Dämpfung des Schwingerrohrs maßgeblichen Parameter, vorzugsweise die Dichte, des zu untersuchenden Messfluids bestimmt wird,
- dass dem erhaltenen Messwert für die dynamische Viskosität des zu untersuchenden Messfluids auf der Justierkurve oder in der Justiertabelle ein bedingter bzw. ein bestimmter Funktionswert des für die Dämpfung des Schwingerrohrs maßgeblichen Parameters zugeordnet wird und ein Vergleich des zugeordneten Funktionswertes mit dem erhaltenen Messwert für den für die Dämpfung des Schwingerrohrs maßgeblichen Parameter erfolgt, und
- dass das Ergebnis dieses Vergleichs im Hinblick auf das allfällige Vorliegen eines Füllfehlers ausgewertet oder zur Bestimmung eines allfälligen Füllfehlers des Biegeschwingers herangezogen wird.

Eine erfindungsgemäße Vorrichtung gemäß Anspruch 12 wird offenbart. Es ist vorgesehen,

- dass die Vorrichtung als Messeinheit einen Biegeschwinger aufweist, der den viskositätsabhängigen Dichtewert des das Schwingerrohr durchströmenden, zu untersuchenden Messfluids ermittelt,
- dass die Vorrichtung zusätzlich eine Einheit zur Ermittlung von Messwerten der dynamischen Viskosität des zu untersuchenden Messfluids aufweist,
- dass diese beiden Messeinheiten an eine Auswerteeinheit angeschlossen sind, die aus der Dämpfung des Schwingerrohrs diese viskositätsabhängigen Dichtewerte ermittelt,
- dass die Auswerteeinheit eine Justierkurve oder -tabelle enthält, welche Justierkurve oder -tabelle den vorab ermittelten funktionalen Zusammenhang zwischen einem für die Dämpfung des Schwingerrohrs maßgeblichen Parameter und der dynamischen Viskosität von Messfluiden enthält bzw. wiedergibt, und
- dass die Auswerteeinheit eine Vergleichseinheit für die Messwerte bzw. Werte besitzt, die einerseits für die dynamische Viskosität und andererseits für den für die Dämpfung des Schwingerrohrs maßgeblichen Parameter ermittelt wurden.

Auf diese Weise kann dem Biegeschwinger zur Untersuchung der Füllqualität eine Wert für die dynamische Viskosität des gefüllten Fluids zur Verfügung gestellt werden und mit dem aus der Messung bekannten dynamischen Viskositätswert des zu untersuchenden Fluids wird die Füllqualität des Biegeschwingers oder des Systems untersucht.

Das Verfahren beruht auf dem Effekt, dass die Dämpfung des Schwingerrohrs hauptsächlich von der dynamischen Viskosität und der Homogenität der Probe beeinflusst wird. Unter der Voraussetzung, dass kein Füllfehler vorliegt, kann bei richtiger Bauweise und Dimensionierung des Schwingers ein eindeutiger funktioneller Zusammenhang zwischen dynamischer Viskosität und Güte gefunden werden.

Bei bekannter Referenz-Viskosität der Probe kann somit eine Abweichung zur erwarteten Güte angegeben werden, welche direkt proportional zur Wahrscheinlichkeit eines Füllfehlers ist.

Die Füllfehlererkennung erfolgt dann in mehreren Schritten:

1. In einer Auswerteeinheit wird zumindest eine Justierkurve hinterlegt, die einen für die Güte und/oder Dämpfung des Schwingerrohrs charakteristischen Messwert mit der dynamischen Viskosität des Fluids in funktionalen Zusammenhang bringt, z.B. eine Abhängigkeit von der Quadratwurzel der Güte von der dynamischen Viskosität. Die Justierkurve kann mit Standards bekannter dynamischer Viskosität und ggf. Dichte bestimmt werden.

2. Eine getrennt arbeitende, externe, weitere Messeinheit wird dazu verwendet, den dynamischen Viskositätswert des zu untersuchenden Fluids zu bestimmen und dieser wird zur Erkennung der Füllqualität des Schwingers der Auswerteeinheit des Biegeschwingers bzw. der gemeinsamen Auswerteeinheit zur Verfügung gestellt.

3. Zumindest ein für die Dämpfung des Schwingerrohrs charakteristischer Parameter der zu untersuchenden Flüssigkeit wird gemessen, wobei das zu untersuchende Fluid mit dem Biegeschwinger untersucht wird.

4. Aus dem Vergleich des Messwerts, der für die Güte/Dämpfung des Schwingerrohrs repräsentativ ist, mit dem Messwert, der bei der Dichtemessung mit dem Biegeschwinger ermittelt wird, kann man beurteilen, inwieweit eine blasenfreie bzw. von Inhomogenitäten freie Befüllung des Schwingers vorliegt.

5. Es kann für den Vergleich der beiden Werte eine maximal erlaubte Abweichung für eine bestimmte Genauigkeit für die tatsächliche Messung des Dichtemesswerts vorgegeben bzw. hinterlegt werden. Gegebenenfalls wird bei Abweichen des gemessenen Werts vom erwarteten Wert eine Warnung ausgegeben und der Benutzer aufgefordert, das Messsystem neu zu befüllen.

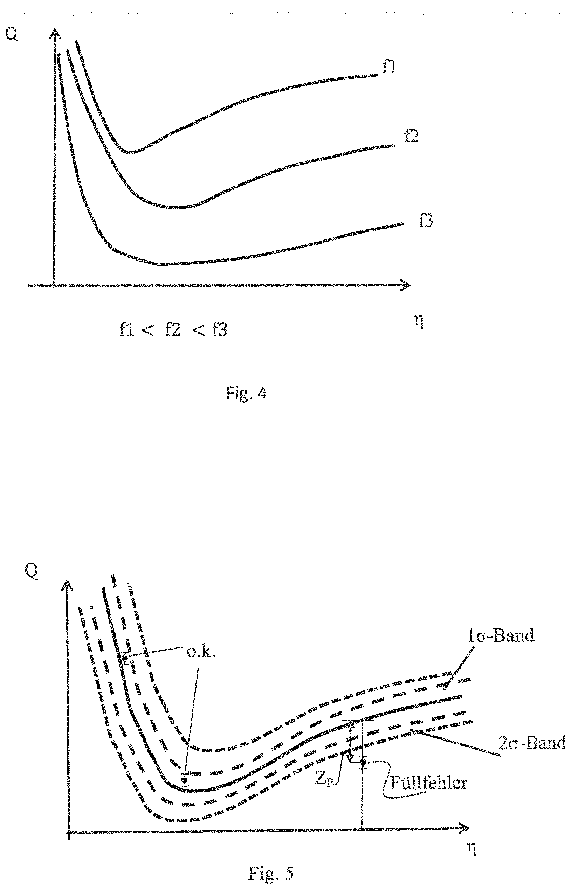

Vorab wird in einem ersten Schritt zum Justieren mit Hilfe von Proben mit bekannten Werten bzw. Justierstandards die Abhängigkeit der Güte oder einer davon abgeleiteten Größe von der Dichte und dynamischen Viskosität ermittelt. Diese Abhängigkeit wird als Funktion dargestellt und gespeichert, wie in Fig. 4 dargestellt ist. Diese Abhängigkeit kann auch als Wertetabelle bzw. Justiertabelle in der Auswerteeinheit hinterlegt werden.

Jedem Schwinger kann somit eine Justierfunktion zur Verfügung gestellt werden, die den Zusammenhang zwischen einem für die Güte/Dämpfung des Schwingerrohrs repräsentativen Parameter und der dynamischen Viskosität wiedergibt.

Die Messung der Güte der Grundschwingung oder auch einer Oberschwingung des Schwingers kann dabei in bekannter Weise auf unterschiedlichen Arten erfolgen, wie z.B. Phasendrehung, Abklingmessung Amplitudenmessung, Amplitudenmodulation, Bandbreitemessung der Resonanz oder Periodenmessung in zwei unterschiedlichen Eigenfrequenzen des Schwingungssystems.

Diese Justierfunktion wird in der Auswerteeinheit der erfindungsgemäßen Vorrichtung zur Verfügung gestellt. Mit einer derart ausgerüsteten Auswerteeinheit erfolgt die Messung, bei der ein Messwert für die Güte und ein Messwert für die dynamische Viskosität ermittelt und der Abstand, allenfalls ein Abstandsmaß, der durch diese beiden Messwerte auf der Justierkurve bzw. in der Justiertabelle gelegenen bzw. enthaltenen Werte ermittelt wird. Beispiele für Justierkurven für unterschiedliche Resonanzfrequenzen sind Fig. 4 zu entnehmen.

Die weiteren Schritte können zumindest auf unterschiedliche Weise erfolgen.

Beispielsweise kann, wie in Fig. 5 dargestellt, durch Mehrfachmessungen ein Toleranzband festgelegt werden, innerhalb dem die Messwerte für die Dämpfung des Schwingerrohrs und/oder Güte einer zu messenden unbekannten Probenflüssigkeit und für eine vorgegebene bzw. gemessene dynamische Viskosität liegen müssen.

Justiermessungen an einer Vielzahl von Proben ergeben einen Fehler bzw. Fehlerintervall für jeden Messpunkt der Justierkurve bzw. -tabelle. Der sich aus der Messung der unbekannten Probenflüssigkeit ergebende Messwert wird überprüft, ob er innerhalb des definierten Toleranzbandes liegt. Liegt dieser Messwert außerhalb, so wird angezeigt, dass die Füllqualität des Schwingers außerhalb des definierten Bereichs liegt.

Eine besonders bevorzugte Ausbildung dieser Vorgangsweise schlägt vor, den rein statistischen z-Wert für die Überprüfung dieses Toleranzbandes zu verwenden.

Der z-Wert ermöglicht einen Stichprobenwert aus einer Stichprobe zu nehmen und zu berechnen, wie viel Standardabweichungen er über oder unter dem Mittelwert liegt. Dazu bestimmt man beim Erstellen der Justierkurve auch die Standardabweichung der einzelnen Messpunkte. Der z-Wert ergibt sich aus dem tatsächlichen Messwert der Güte Q bzw. dem zur Erstellung der Justierfunktion gewählten für die Güte/Dämpfung des Schwingerrohrs repräsentativen Parameter P als Funktion der dynamischen Viskosität Eta - dem Funktionswert der ermittelten oder errechneten Güte Q in Abhängigkeit von der dynamischen Viskosität und beschreibt die Abweichung eines Messwerts als Vielfaches der Standardabweichung.

Im Vergleich zu bekannten Methoden der Blasenerkennung ist die vorgeschlagene sehr vereinfacht und weniger fehleranfällig, da sie die dazu notwendigen Entscheidungsparameter auf einen reduziert, nämlich die Referenzviskosität.

Fig. 4 zeigt exemplarisch den Verlauf der Güte für unterschiedliche Schwingungsfrequenzen des Schwingers als $Q = f(\eta)$.

Fig. 5 zeigt innerhalb und außerhalb des Toleranzbands liegende Messwerte und ermöglicht die Entscheidung, ob Füllfehler vorhanden sind über das z-Ergebnis (Vielfache der Standardabweichung G).

Je nach verwendeter Mode und geforderter Genauigkeit der Blasenerkennung muss also die verwendete dynamischen Viskosität bzw. der als Messwert eingesetzte dynamische Viskositätswert nicht sehr genau bekannt sein. Im Allgemeinen ist ein Fehler < 10% für den ermittelten dynamischen Viskositätswert ausreichend. Diese dynamische Viskosität kann also auch mit einfachen Mitteln gemessen werden. Weiters beschleunigt diese Vorgehensweise die Erkennung von Blasen, da sie keine weiteren Informationen benötigt und bereits am Beginn der Dichtemessung verwendet werden kann. Ein Online Monitoring ist möglich.

Dieses Vorgehen hat den Vorteil, dass bereits während der Befüllung und ohne Berechnung eines Dichtewerts bei bekannter dynamischer Viskosität die Messdaten direkt zur Überprüfung der Füllqualität herangezogen werden können.

Am z-Wert erkennt man ebenfalls, wie gut das Schwingerrohr gefüllt ist und erhält eine sofortige Aussage bis der z-Wert für die gewünschte Genauigkeit der Messung stimmt. Man kann hier einfach empirische Grenzen bestimmen. Da die Dichtemessung durch kleinste Blasen oft nicht sehr stark beeinflusst wird, kann man hier die Grenzen aus der gewünschten Genauigkeit der Dichtemessung bestimmen.

1. Eine weitere Auswertemöglichkeit besteht darin, dass eine Justierkurve erfolgt, so wie sie in Fig. 2 dargestellt ist, wobei $K_v = F(\eta)$ mit unterschiedlichen Dichte- und Viskositäts-Standards ermittelt wird.
Diese Justierfunktion ist eine direkte Justierfunktion, die den Dichtefehler des Biegeschwingers mit der dynamischen Viskosität in direkte Beziehung setzt.

2. Ein Dichte-Korrekturwert $K_d$ wird aus der Messung der Dämpfung oder einer abgeleiteten Größe bestimmt bzw. errechnet. Hier wird also nicht nur ein Parameter gemessen, sondern der Parameter mit einer weiteren Justierkurve in die unter 1) ermittelte Funktion übersetzt.

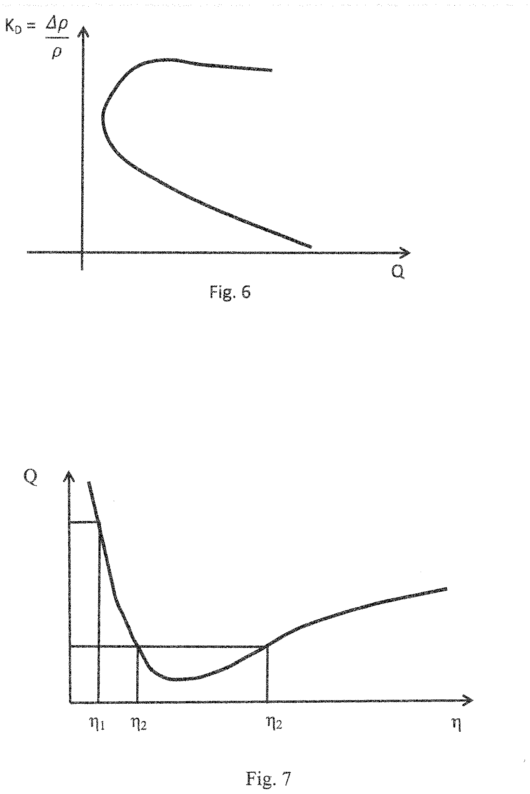

Trägt man zum Beispiel den Fehler Delta Rho zu Rho als Funktion der Güte auf, erhält man einen Parabelzusammenhang, der ungefähr wie in Fig. 6 dargestellt aussieht:

3. Ein Dichte-Korrekturwert $K_v$ wird aus der mit dem Viskosimeter gemessenem Wert errechnet bzw. aus der Justierkurve des verwendeten Biegeschwingers ermittelt. (Justiermessungen mit unterschiedlichen Viskositätsstandards)

4. Die Werte $K_d$, ermittelt aus der Justierfunktion der Güte einer Eigenschwingung, und $K_v$ werden miteinander verglichen. Stimmen sie nicht innerhalb einer zuvor festgelegten Grenze überein, so wird eine Füllfehlerwarnung ausgegeben. Zum Beispiel kann festgelegt werden, dass der Betrag der Differenz $K_d - K_v$ einen bestimmten Wert nicht überschreiten darf, zum Beispiel $K_d - K_v < 0,0001$.

Auch damit wird sichergestellt, dass die Güte des Schwingers mit der tatsächlichen dynamischen Viskosität des gefüllten Mediums korreliert und nicht Inhomogenitäten in der Befüllung des Schwingers den Messwert verfälschen.

Bestimmung der Füllqualität im SVM:

Natürlich kann auch die Befüllung in dem oben vorgestellten Viskosimeter mangelhaft erfolgt sein und der ermittelte dynamische Viskositätswert nicht den Tatsachen entsprechen. Damit ist der untersuchte dynamische Viskositätswert der Probe fehlerhaft und es ergibt sich im zweiten vorgestellten Verfahren eine Diskrepanz zwischen den beiden Korrekturwerten für die Dichte, obwohl die Befüllung des Schwingers korrekt erfolgt ist.

Dies kann beispielsweise geprüft werden, indem man aus der Güte des Schwingers über die Justierkurve in die Auswerteeinheit die tatsächliche dynamische Viskosität des Fluides bestimmt.

Zusätzlich kann, wenn kombiniert mit einer Viskositätsmessung, die Plausibilität der Viskositätsmessung getestet werden. Ein möglicher grober Füllfehler, oder allgemeiner, eine Fehlmessung der dynamischen Viskosität, kann mittels der inversen Methode identifiziert werden. (siehe Fig. 7).

Dazu müsste eine zweite Oberschwingung oder eine beliebige andere Mode untersucht und vermessen werden wie in den oben genannten Verfahren beschrieben. Aus dem funktionalen Zusammenhang kann aus einer Güte ja auf die dynamische Viskosität rückgeschlossen werden. Wenn die Kurve nicht eindeutig ist, kann durch die Kombination zweier Messungen auch der richtige zu verwendende dynamische Viskositätswert ermittelt werden. Stimmt die ermittelte dynamische Viskosität aus der Güte der ersten untersuchten Eigenschwingung mit jener einer zweiten untersuchten Mode überein, so kann davon ausgegangen werden, dass der Füllfehler im Viskosimeter bzw. im falsch gemessenen dynamischen Viskositätswert zu suchen ist und der Biegeschwinger korrekt befüllt ist.

Eine Kombination der Verfahren führt so zu einer sicheren Erkennung, ob die Differenz in der Viskositätsmessung liegt. Wenn die Güten von zwei unterschiedlichen Eigenschwingungen (beispielsweise Grund- und erste Oberschwingung) nicht übereinstimmen, ist zu vermuten, dass der Füllfehler in der Dichtezelle liegt.

**Patentansprüche**

1. Verfahren zur Ermittlung der Füllqualität eines Biegeschwingers (11), dessen Schwingerrohr (1) von einem zu untersuchenden Messfluid durchströmt wird,

- wobei

eine Justierkurve oder -tabelle herangezogen wird, die den funktionalen Zusammenhang zwischen einem für die Dämpfung des Schwingerrohrs (1) maßgeblichen Parameter und der dynamischen Viskosität von Messfluiden wiedergibt,
wobei zur Erstellung der Justierkurve oder -tabelle Messfluide mit bekannter dynamischer Viskosität als Justierstandards verwendet werden und der Zusammenhang zwischen der dynamischen Viskosität der Messfluide und eines für die Dämpfung des Schwingerrohrs (1) maßgeblichen Parameters, vorzugsweise der Amplitude und/oder Phase einer Eigenschwingung, ermittelt wird,

- wobei zur Ermittlung der Füllqualität im Zuge der Messung des zu untersuchenden Messfluids mit dem Biegeschwinger (11) mit einem eigenständigen, weiteren bzw. zusätzlichen Messgerät (12) zumindest ein Messwert für die dynamische Viskosität des zu untersuchenden Messfluids bestimmt wird,

- wobei im Zuge der Messung des zu untersuchenden Messfluids mit dem Biegeschwinger (11) zumindest ein Messwert für den für die Dämpfung des Schwingerrohrs (1) maßgeblichen Parameter, vorzugsweise die Dichte, des zu untersuchenden Messfluids bestimmt wird,

- wobei dem erhaltenen Messwert für die dynamische Viskosität des zu untersuchenden Messfluids auf der Justierkurve oder in der Justiertabelle ein bedingter bzw. ein bestimmter Funktionswert des für die Dämpfung des Schwingerrohrs (1) maßgeblichen Parameters zugeordnet wird und ein Vergleich des zugeordneten Funktionswertes mit dem erhaltenen Messwert für den für die Dämpfung des Schwingerrohrs (1) maßgeblichen Parameter erfolgt, und

- wobei das Ergebnis dieses Vergleichs im Hinblick auf das allfällige Vorliegen eines Füllfehlers ausgewertet oder zur Bestimmung eines allfälligen Füllfehlers des Biegeschwingers (11) herangezogen wird.

2. Verfahren nach Anspruch 1, **dadurch gekennzeichnet, dass** die Messung der dynamischen Viskosität des zu untersuchenden Messfluids und des für die Dämpfung des Schwingerrohrs (1) maßgeblichen Parameters unabhängig voneinander, aber insbesondere gleichzeitig, mit unterschiedlichen oder unabhängigen Messgeräten (11, 12) vorgenommen wird.

3. Verfahren nach Anspruch 1 oder 2, **dadurch gekennzeichnet, dass** für den Messwert für den für die Dämpfung des Schwingerrohrs (1) maßgeblichen Parameter der Abstand, allenfalls ein Abstandsmaß, zu dem durch den erhaltenen Messwert für die dynamische Viskosität des zu untersuchenden Messfluids auf der Justierkurve bzw. in der Justiertabelle festgelegten Funktionswert, ermittelt wird.

4. Verfahren nach einem der Ansprüche 1 bis 3, **dadurch gekennzeichnet, dass** die Messwerte für die dynamische Viskosität des zu untersuchenden Messfluids und des für die Dämpfung des Schwingerrohrs (1) maßgeblichen Parameters einer dem Biegeschwinger (11) zugeordneten Auswerteeinheit (9) zugeführt werden, in der gegebenenfalls die Justierkurven und/oder die Justiertabelle hinterlegt bzw. abgespeichert vorliegen.

5. Verfahren nach einem der Ansprüche 1 bis 4, **dadurch gekennzeichnet, dass** zur Bestimmung des für die Dämpfung des Schwingerrohrs (1) maßgeblichen Parameters des zu untersuchenden Messfluids Werte für die Grundschwingung und/oder zumindest eine Oberschwingung herangezogen werden.

6. Verfahren nach einem der Ansprüche 1 bis 5, **dadurch gekennzeichnet, dass** durch Mehrfachmessungen ein Toleranzband für die auf der Justierkurve oder in der Justiertabelle liegenden Werte festgelegt und geprüft wird, ob die den Messwerten des für die Dämpfung des Schwingerrohrs (1) maßgeblichen Parameters des zu untersuchenden Messfluids und/oder der dynamischen Viskosität des zu untersuchenden Messfluids funktional zugeordneten Werte der Justierkurve oder Justiertabelle innerhalb des Toleranzbands liegen und zutreffendenfalls auf einer ordnungsgemäßen Befüllung erkannt wird.

7. Verfahren nach einem der Ansprüche 1 bis 6, **dadurch gekennzeichnet,**

- **dass** Justiermessungen betreffend Dichte und/oder dynamische Viskosität an einer Vielzahl von Justierstandards mit bekannter dynamischer Viskosität vorgenommen werden und damit ein Fehlerintervall für jeden Funktionswert der Justierkurve bzw. jeden Wert der Justiertabelle festgelegt wird, und
- **dass** der sich aus der Messung des Messfluids ergebende Wert dahingehend überprüft wird, ob er innerhalb des dadurch definierten Toleranzbands liegt.

8. Verfahren nach einem der Ansprüche 1 bis 7, **dadurch gekennzeichnet, dass** der rein statistische Z-Wert für die Überprüfung des Toleranzbands herangezogen wird.

9. Verfahren nach einem der Ansprüche 1 bis 8, **dadurch gekennzeichnet, dass** durch Einsatz des Z-Werts ein Stichprobenwert aus einer Stichprobe genommen wird und berechnet wird, wie viele Standardabweichungen der Stichprobenwert über oder unter dem Mittelwert liegt, wobei bei Erstellung der Justierkurve bzw. -tabelle auch die Standardabweichung der einzelnen Messpunkte ermittelt wird.

10. Verfahren nach einem der Ansprüche 1, 2 oder 4 bis 9 wenn nicht abhängig von Anspruch 3, **dadurch gekennzeichnet, dass** die Erstellung der Justierkurven und/oder der Justiertabellen mit unterschiedlichen Justierstandards mit bekannter Dichte- und dynamischer Viskosität vorgenommen wird und als Ergebnis eine direkte Justierfunktion oder Justiertabelle erhalten wird, die den Dichtefehler des Biegeschwingers (11) mit der dynamischen Viskosität in eine funktionale Beziehung setzt, wobei ein Dichte-Korrekturwert $K_d$ aus der Messung des für die Dämpfung des Schwingerrohrs (1) maßgeblichen Parameters oder einer aus diesem abgeleiteten Größe bestimmt bzw. errechnet wird, wobei gilt: $K_d = \Delta p/p$ .

11. Verfahren nach einem der Ansprüche 1, 2 oder 4 bis 10 wenn nicht abhängig von Anspruch 3, **dadurch gekennzeichnet,**

   - **dass** die Justierkurve oder -tabelle mit unterschiedlichen Justierstandards mit bekannter Dichte- und dynamischer Viskosität ermittelt wird, die den Dichtefehler des Biegeschwingers mit der dynamischen Viskosität in Beziehung setzt,
   - **dass** ein Dichte-Korrekturwert $K_d$ aus der Messung des für die Dämpfung des Schwingerrohrs (1) maßgeblichen Parameters ermittelt wird, wobei gilt: $K_d = \Delta p/p$, und wobei eine Justierfunktion der Dämpfung einer Eigenschwingung vorgeben wird,
   - **dass** ein Dichte-Korrekturwert $K_v$ aus dem mit dem Viskosimeter gemessenen Messwert der dynamischen Viskosität ermittelt wird, wobei gilt: $K_v(\eta) = \Delta\rho(\eta)/\rho$, und
   - **dass** die Dichte-Korrekturwerte $K_d$, ermittelt aus der Justierfunktion der Dämpfung einer Eigenschwingung und die Dichte-Korrekturwerte $K_v$ miteinander verglichen werden.

12. Vorrichtung zur Durchführung eines Verfahrens nach einem der Ansprüche 1 bis 11,

   - wobei die Vorrichtung als Messeinheit einen Biegeschwinger (11) aufweist, der den viskositätsabhängigen Dichtewert des das Schwingerrohr (1) durchströmenden, zu untersuchenden Messfluids ermittelt,
   - wobei die Vorrichtung zusätzlich eine Einheit (12) zur Ermittlung von Messwerten der dynamischen Viskosität des zu untersuchenden Messfluids aufweist,
   - dass diese beiden Messeinheiten (11, 12) an eine Auswerteeinheit (9) angeschlossen sind, die aus der Dämpfung des Schwingerrohrs (1) diese viskositätsabhängigen Dichtewerte ermittelt, und
   - wobei die Auswerteeinheit (9) eine Justierkurve oder -tabelle enthält, welche Justierkurve oder -tabelle den vorab ermittelten funktionalen Zusammenhang zwischen einem für die Dämpfung des Schwingerrohrs (1) maßgeblichen Parameter und der dynamischen Viskosität von Messfluiden enthält bzw. wiedergibt, und
   - wobei die Auswerteeinheit eine Vergleichseinheit für die Messwerte bzw. Werte besitzt, die einerseits für die dynamische Viskosität und andererseits für den für die Dämpfung des Schwingerrohrs (1) maßgeblichen Parameter ermittelt wurden.

13. Vorrichtung nach Anspruch 12, **dadurch gekennzeichnet, dass** die Vergleichseinheit von einer Abstandsmaßeinheit gebildet ist, die den Abstand der Messwerte von der Justierkurve oder von den in der Justiertabelle enthaltenen Funktionswerten ermittelt.

14. Vorrichtung nach einem der Ansprüche 12 oder 13, **dadurch gekennzeichnet, dass** an die Vergleichseinheit eine Anzeigeeinheit für das Vergleichsresultat und/oder für das Ausmaß der Übereinstimmung bzw. des Abstands zwischen den auf der Justierkurve bzw. in der Justiertabelle für die dynamische Viskosität liegenden Werte von den für die für die Dämpfung des Schwingerrohrs (1) maßgeblichen Parameters erhaltenen und auf der Justierkurve liegenden bzw. in der Justiertabelle enthaltenen Werten angeschlossen ist.

**Claims**

1. Method for determining the filling quality of an oscillator (11), the oscillator tube (1) of which is flowed through by a measurement fluid to be examined,

   - wherein an adjustment curve or adjustment table is used which provides the functional connection between a parameter significant for the damping of the oscillator tube (1) and the dynamic viscosity of measurement fluids, wherein, in order to create an adjustment curve or adjustment table, measurement fluids with known dynamic viscosity are used as adjustment standards and the connection between the dynamic viscosity of the measurement fluid and a parameter significant for the damping of the oscillator tube (1), preferably the amplitude and/or phase of a natural vibration, is determined,
   - wherein, in order to determine the filling quality, in the course of the measurement of the measurement fluid with the oscillator (11) using an autonomous, further or additional measurement device (12), at least one measurement value is specified for the dynamic viscosity of the measurement fluid to be examined,

- wherein in the course of the measurement of the measurement fluid to be examined with the oscillator (11) at least one measurement value is specified for the parameter, significant for the damping of the oscillator tube (1), said parameter being preferably the density of the measurement fluid to be examined,

- wherein the obtained measurement value for the dynamic viscosity of the measurement fluid to be examined on the adjustment curve or in the adjustment table is assigned a conditional or a specific function value of the parameter significant for the damping of the oscillator tube (1) and a comparison of the assigned function value with the obtained measurement value for the parameter significant for the damping of the oscillator tube (1) is carried out, and

- wherein the result of this comparison is evaluated with regard to the possible presence of a filling error or is used to determine a possible filling error of the oscillator (11).

2. Method according to claim 1, **characterised in that** the measurement of the dynamic viscosity of the measurement fluid to be examined and of the parameter significant for the damping of the oscillator tube (1) are undertaken independently of one another, but, in particular, simultaneously, using different or autonomous measurement devices (11, 12).

3. Method according to claim 1 or 2, **characterised in that** for the measurement value for the parameter significant for the damping of the oscillator tube (1), the spacing, at best a spacing dimension, from the function value defined by the obtained measurement value for the dynamic viscosity of the measurement fluid to be examined in the adjustment curve or in the adjustment table, is determined.

4. Method according to any of claims 1 to 3, **characterised in that** the measurement values for the dynamic viscosity of the measurement fluid to be examined and of the parameter significant for the damping of the oscillator tube (1) are supplied to an evaluation unit (9) assigned to the oscillator (11), in which, where appropriate, the adjustment curves and/or the adjustment table are stored or saved.

5. Method according to any of claims 1 to 4, **characterised in that** in order to determine the parameter, significant for the damping of the oscillator tube (1), of the measurement fluid to be examined, values for the fundamental oscillation and/or at least one harmonic are used.

6. Method according to any of claims 1 to 5, **characterised in that** by means of multiple measurements a tolerance range is determined for the values situated on the adjustment curve or in the adjustment table, and an examination is carried out as to whether the values of the adjustment curve or adjustment table functionally assigned to the measurement values of the parameter, significant for the damping of the oscillator tube (1), of the measurement fluid to be examined and/or of the dynamic viscosity of the measurement fluid to be examined are situated within the tolerance range, and, should this be the case, a proper filling is recognised.

7. Method according to any of claims 1 to 6, **characterised in**

- **that** adjustment measurements concerning density and/or dynamic viscosity are undertaken on a multiplicity of adjusting standards with known dynamic viscosity and is thereby an error interval is determined for each function value of the adjustment curve or each value of the adjustment table, and

- **that** the value resulting from the measurement of the measurement fluid is checked to see whether it lies within the thus defined tolerance range.

8. Method according to any of claims 1 to 7 **characterised in that** the purely statistical Z value is used for checking the tolerance range.

9. Method according to any of claims 1 to 8, **characterised in that** by using the Z value, a sample value is taken from a sample and a calculation is undertaken to determine how many standard deviations of the sample value lie above or below the average, wherein when creating the adjustment curve or table, the standard deviation of the individual measurement points is also determined.

10. Method according to any of claims 1, 2 or 4 to 9, if not dependent on claim 3, **characterised in that** the creation of the adjustment curves and/or the adjustment tables is undertaken with different adjustment standards with known density and dynamic viscosity and, as a result, a direct adjustment function or adjustment table is obtained which places the density error of the oscillator (11) in a functional relationship with the dynamic viscosity, wherein a density correction value $K_d$ is specified or calculated from the measurement of the parameters significant for the damping of the oscillator tube (1) or a variable derived therefrom, wherein the following is true: $K_d = \Delta p/p$ .

**11.** Method according to any of claims 1, 2 or 4 to 10 when not dependent on claim 3, **characterised in**

- **that** the adjustment curve or the adjustment table is determined with known density and dynamic viscosity, which places the density error of the oscillator in relation to the dynamic viscosity,
- **that** a density correction value $K_d$ is determined from the measurement of the parameters significant for the damping of the oscillator tube (1), wherein the following is true: $K_d = \Delta\rho/\rho$, and wherein an adjustment function of the damping of a natural oscillation is specified,
- **that** a density correction value $K_v$ is determined from the measurement value, measured with the viscosimeter, of the dynamic viscosity, wherein the following is true: $K_v(\eta) = \Delta\rho(\eta)/\rho$, and
- **that** the density correction values $K_d$, determined from the adjustment function of the damping of a natural oscillation, and the density correction values $K_v$ are compared with one another.

**12.** Device for carrying out a method according to any of claims 1 to 11,

- wherein the device has an oscillator (11) as a measurement unit, which determines the viscosity-dependent density value of the measurement fluid to be examined which flows through the oscillator tube (1),
- wherein the device has in addition a unit (12) for determining measurement values of the dynamic viscosity of the measurement fluid to be examined,
- that these two measurement units (11, 12) are connected to an evaluation unit (9) which determines these viscosity-dependent density values from the damping of the oscillator tube (1), and
- wherein the evaluation unit (9) contains an adjustment curve or adjustment table, which adjustment curve or adjustment table contains or renders the functional connection, determined in advance, between a parameter significant for the damping of the oscillator tube (1) and the dynamic viscosity of the measurement fluids, and
- wherein the evaluation unit has a comparison unit for the measurement values or values, which are determined on the one hand for the dynamic viscosity and on the other hand for the parameter significant for the damping of the oscillator tube (1).

**13.** Device according to claim 12, **characterised in that** the comparison unit is formed by a distance measurement unit which determines the distance of the measurement values from the adjustment curve or from the function values contained in the adjustment table.

**14.** Device according to any of claims 12 or 13, **characterised in that** to the comparison unit is connected a display unit for the comparison result and/or for the extent of the consistency or the distance between the values lying on the adjustment curve or present in the adjustment table for the dynamic viscosity, and the values obtained for the parameters significant for the damping of the oscillator tube (1) and lying on the adjustment curve or present in the adjustment table.

**Revendications**

**1.** Procédé de détermination de la qualité de remplissage d'un résonateur de flexions (11), dont le tube de résonateur (1) est traversé par un fluide de mesure à examiner,

- dans lequel une courbe ou un tableau d'ajustement est utilisé, lequel restitue le rapport fonctionnel entre un paramètre essentiel pour l'amortissement du tube de résonateur (1) et la viscosité dynamique de fluides de mesure,
dans lequel pour l'établissement de la courbe ou du tableau d'ajustement, des fluides de mesure avec une viscosité dynamique connue sont utilisés comme standard d'ajustement et le rapport entre la viscosité dynamique des fluides de mesure et un paramètre essentiel pour l'amortissement du tube de résonateur (1), de préférence l'amplitude et/ou la phase d'une propre oscillation est déterminé,
- dans lequel au moins une valeur de mesure pour la viscosité dynamique du fluide de mesure à examiner est déterminée pour la détermination de la qualité de remplissage au cours de la mesure du fluide de mesure à examiner avec le résonateur de flexions (11) avec un appareil de mesure (12) autonome, autre ou supplémentaire,
- dans lequel au moins une valeur de mesure pour le paramètre essentiel pour l'amortissement du tube de résonateur (1), de préférence la densité, du fluide de mesure à examiner est déterminée au cours de la mesure du fluide de mesure à examiner avec le résonateur de flexions (11),
- dans lequel une valeur fonctionnelle conditionnée ou une valeur fonctionnelle déterminée du paramètre essentiel pour l'amortissement du tube de résonateur (1) est associée à la valeur de mesure reçue pour la viscosité dynamique du fluide de mesure à examiner sur la courbe d'ajustement ou dans le tableau d'ajustement et une comparaison de la valeur fonctionnelle associée avec la valeur de mesure reçue est effectuée pour le paramètre essentiel pour l'amortissement du tube de résonateur (1), et
- dans lequel le résultat de cette comparaison est évalué par rapport à la présence éventuelle d'une erreur de remplissage ou est utilisé pour la détermination d'une erreur de remplissage éventuelle du résonateur de flexions (11).

2. Procédé selon la revendication 1, **caractérisé en ce que** la mesure de la viscosité dynamique du fluide de mesure à examiner et du paramètre essentiel pour l'amortissement du tube de résonateur (1) est entreprise indépendamment l'un de l'autre, mais en particulier simultanément, avec des appareils de mesure (11, 12) différents ou indépendants.

3. Procédé selon la revendication 1 ou 2, **caractérisé en ce que** pour la valeur de mesure pour le paramètre essentiel pour l'amortissement du tube de résonateur (1), la distance, éventuellement une mesure de distance, par rapport à la valeur fonctionnelle fixée par la valeur de mesure reçue pour la viscosité dynamique du fluide de mesure à examiner sur la courbe d'ajustement ou dans le tableau d'ajustement est déterminée.

4. Procédé selon l'une quelconque des revendications 1 à 3, **caractérisé en ce que** les valeurs de mesure pour la viscosité dynamique du fluide de mesure à examiner et du paramètre essentiel pour l'amortissement du tube de résonateur (1) sont amenées à une unité d'évaluation (9) associée au résonateur de flexions (11), dans laquelle éventuellement les courbes d'ajustement et/ou le tableau d'ajustement se trouvent enregistrées ou mémorisées.

5. Procédé selon l'une quelconque des revendications 1 à 4, **caractérisé en ce que** des valeurs pour l'oscillation de base et/ou au moins une harmonique sont utilisées pour la détermination du paramètre essentiel pour l'amortissement du tube de résonateur (1) du fluide de mesure à examiner.

6. Procédé selon l'une quelconque des revendications 1 à 5, **caractérisé en ce que** par des mesures multiples, une bande de tolérance pour les valeurs se trouvant sur la courbe d'ajustement ou dans le tableau d'ajustement est fixée et il est vérifié si les valeurs associées de manière fonctionnelle aux valeurs de mesure du paramètre essentiel pour l'amortissement du tube de résonateur (1) du fluide de mesure à examiner et/ou de la viscosité dynamique du fluide de mesure à examiner de la courbe d'ajustement ou du tableau d'ajustement se trouvent dans la bande de tolérance et si cela est applicable il est reconnu un remplissage conforme.

7. Procédé selon l'une quelconque des revendications 1 à 6, **caractérisé en ce que**

- des mesures d'ajustement concernant la densité et/ou la viscosité dynamique sont entreprises sur une pluralité de standards d'ajustement avec une viscosité dynamique connue et ainsi un intervalle d'erreur pour chaque valeur fonctionnelle de la courbe d'ajustement ou chaque valeur du tableau d'ajustement est fixé, et
- la valeur résultant de la mesure du fluide de mesure est vérifiée dans le sens où elle se trouve dans la bande de tolérance définie ainsi.

8. Procédé selon l'une quelconque des revendications 1 à 7, **caractérisé en ce que** la valeur Z purement statistique est utilisée pour la vérification de la bande de tolérance.

9. Procédé selon l'une quelconque des revendications 1 à 8, **caractérisé en ce que** par utilisation de la valeur Z, une valeur d'échantillonnage est prise d'un échantillonnage et il est calculé de combien d'écarts standard la valeur d'échantillonnage se trouve sur ou sous la valeur médiane, dans lequel lors de l'établissement de la courbe ou du tableau d'ajustement l'écart standard des points de mesure individuels est aussi déterminé.

10. Procédé selon l'une quelconque des revendications 1, 2 ou 4 à 9 lorsqu'elle ne dépend pas de la revendication 3, **caractérisé en ce que** l'établissement des courbes d'ajustement et/ou des tableaux d'ajustement est entrepris avec différents standards d'ajustement avec une densité connue et une viscosité dynamique et une fonction d'ajustement ou un tableau d'ajustement direct est reçu comme résultat, lequel met dans un rapport fonctionnel l'erreur de densité du résonateur de flexions (11) avec la viscosité dynamique, dans lequel une valeur de correction de densité $K_d$ est déterminée ou calculée à partir de la mesure du paramètre essentiel pour l'amortissement du tube de résonateur (1) ou une grandeur dérivée de celui-ci, dans lequel ce qui suit est vrai :

$$K_d = \Delta\rho/\rho \ .$$

11. Procédé selon l'une quelconque des revendications 1, 2 ou 4 à 10 lorsqu'elle ne dépend pas de la revendication 3, **caractérisé en ce que**

- la courbe ou le tableau d'ajustement est déterminé avec des standards d'ajustement différents avec une densité connue et une viscosité dynamique, laquelle met en rapport l'erreur de densité du résonateur de flexions avec la viscosité dynamique,
- une valeur de correction de densité $K_d$ est déterminée à partir de la mesure du paramètre essentiel pour l'amortissement du tube de résonateur (1), dans lequel ce qui suit est vrai : $K_d = \Delta p/\rho$, et dans lequel une fonction d'ajustement de l'amortissement d'une propre oscillation est prescrite,
- une valeur de correction de densité $K_v$ est déterminée à partir de la valeur de mesure mesurée avec le viscosimètre de la viscosité dynamique, dans lequel ce qui suit est vrai : $K_v(\eta) = \Delta\rho(\eta)/\rho$, et
- les valeurs de correction de densité $K_d$, sont déterminées à partir de la fonction d'ajustement de l'amortissement d'une propre oscillation et les valeurs de correction de densité $K_v$ sont comparées les unes aux autres.

12. Dispositif de réalisation d'un procédé selon l'une quelconque des revendications 1 à 11,

- dans lequel le dispositif présente comme unité de mesure un résonateur de flexions (11) qui détermine la valeur de densité dépendant de la viscosité du fluide de mesure à examiner, traversant le tube de résonateur (1),
- dans lequel le dispositif présente en outre une unité (12) pour la détermination de valeurs de mesure de la viscosité dynamique du fluide de mesure à examiner,
- ces deux unités de mesure (11, 12) sont raccordées à une unité d'évaluation (9) qui détermine à partir de l'amortissement du tube de résonateur (1) ces valeurs de densité dépendant de la viscosité, et
- dans lequel l'unité d'évaluation (9) contient une courbe ou un tableau d'ajustement, laquelle courbe ou lequel tableau d'ajustement contient ou restitue le rapport fonctionnel déterminé au préalable entre un paramètre essentiel pour l'amortissement du tube de résonateur (1) et la viscosité dynamique de fluides de mesure, et
- l'unité d'évaluation possède une unité de comparaison pour les valeurs de mesure ou des valeurs qui ont été déterminées d'une part pour la viscosité dynamique et d'autre part pour le paramètre essentiel pour l'amortissement du tube de résonateur (1).

13. Dispositif selon la revendication 12, **caractérisé en ce que** l'unité de comparaison est formée par une unité de mesure de distance qui détermine la distance des valeurs de mesure de la courbe d'ajustement ou des valeurs fonctionnelles contenues dans le tableau d'ajustement.

14. Dispositif selon l'une quelconque des revendications 12 ou 13, **caractérisé en ce qu'**à l'unité de comparaison est raccordée une unité d'affichage pour le résultat de comparaison et/ou pour l'ampleur de la concordance ou de la distance entre les valeurs se trouvant sur la courbe d'ajustement ou dans le tableau d'ajustement pour la viscosité dynamique et les valeurs obtenues pour les paramètres essentiels pour l'amortissement du tube de résonateur (1) et se trouvant sur la courbe d'ajustement ou contenues dans le tableau d'ajustement.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- AT 505937
- WO 2011008307 A
- AT 400767 B
- EP 0487499 A2
- US 5339258 A